# EUROPÄISCHE PATENTSCHRIFT

(11) **EP 1 924 535 B1**
(45) Veröffentlichungstag und Bekanntmachung des Hinweises auf die Patenterteilung: **14.01.2009**
(21) Anmeldenummer: 06777060.2
(22) Anmeldetag: 24.08.2006
(51) Int. Cl.: C04B 26/02

(54) **LEICHTPUTZMISCHUNG IN PASTÖSER FORM**
LIGHT CLEANING MIXTURE IN A PASTY FORM
MELANGE D'ENDUIT LEGER DE FORME PATEUSE

(30) Priorität: 24.08.2005 DE 102005040091
(43) Veröffentlichungstag der Anmeldung: 28.05.2008
(73) Patentinhaber: ALSECCO BAUCHEMISCHE PRODUKTE GmbH & Co KG, 36208 Wildeck-Richelsdorf (DE)
(72) Erfinder: BROX, Matthias, 36199 Rotenburg a. d. Fulda (DE); MICHAELIS, Uwe, 64295 Darmstadt (DE); BEFURT, Uwe, 64372 Ober-Ramstadt (DE); RETTIG, Holger, 64853 Lengfeld (DE)
(74) Vertreter: Pfenning, Meinig & Partner GbR
(86) Internationale Anmeldenummer: PCT/EP2006/008322
(87) Internationale Veröffentlichungsnummer: WO 2007/022983

(56) Entgegenhaltungen:
- EP-A- 1 489 056
- EP-A2- 0 842 910
- DE-A1- 10 101 433
- US-A- 4 391 647

## Beschreibung

Die Erfindung betrifft eine Leichtputzmischung in pastöser Form, die eine verbesserte Lagerstabilität aufweist. Diese basiert auf einer Zusammensetzung, die ein Bindemittel, anorganische Füllstoffe, Leichtfüllstoffe, Wasser sowie weitere Additive enthält.

Putzbeschichtungen in Form von Leichtputzen sind in vielfältiger Form aus dem Stand der Technik bekannt. Derartige Putzsysteme können direkt oder auch in Verbindung mit einer Armierungsschicht auf unterschiedlichsten Untergründen aufgebracht werden.

Die US 4,391,647 beschreibt eine asbestfreie Zusammensetzung, die als Putz, zur Verfugung wie auch als Spachtelmasse eingesetzt werden kann und hohle Silizium-Partikel enthält. Diese kann unter Anderem Latex und Polyvinylalkohol als Bindemittel wie auch weitere Zusatz- und Füllstoffe enthalten.

Aus der DE 101 01 433 A1 ist ein wärmedämmender Leichtputz auf Basis von hydraulischen Bindemitteln und Zuschlägen aus Schaumpolystyrol-Partikeln, die mit einem dünnen Oberflächenfilm aus einer Polymerisat-Dispersion benetzt sind, bekannt. Hierbei handelt es sich um ein Trockenputzsystem, das vor Ort, d.h. auf der Baustelle, mit Wasser vermischt wird, um es in direktem Anschluss auf den Untergrund aufzubringen. Hiermit verbunden ist der zusätzliche Arbeitsschritt der Vermischung des Trockensystems mit Wasser.

Aufgabe der vorliegenden Erfindung war es daher, ein pastöses Putzbeschichtungssystem bereitzustellen, das keine zusätzliche Vermischung mit Wasser vor Ort, d.h. an der Baustelle, erfordert.

Diese Aufgabe wird durch den Leichtputz mit den Merkmalen des Anspruchs 1 und die erfindungsgemäße Verwendung gemäß Anspruch 10 gelöst. Die weiteren abhängigen Ansprüche zeigen vorteilhafte Weiterbildungen auf.

Erfindungsgemäß wird eine Leichtputzmischung in pastöser Form bereitgestellt, der folgende Komponenten enthält (bezogen auf 100 Masse-%):
a) 3,0 bis 30 Masse-% eines Bindemittels, ausgewählt aus der Gruppe bestehend aus in Wasser dispergierten Polymerisaten, die ausgewählt sind aus Polyacrylaten, Alkylacrylstyrol und/oder Butadien/Styrolcopolymerisaten,
b) 5,0 bis 99 Masse-% anorganische Füllstoffe mit einem Schüttgewicht > 1 g/cm³,
c) 1,0 bis 30 Masse-% Leichtfüllstoffe mit einem Schüttgewicht < 1 g/cm³,
d) 0,01 bis 20 Masse-% Additive sowie
e) 3,0 bis 30 Masse-% Wasser.

Überraschenderweise führt die erfindungsgemäße Zusammensetzung des Leichtputzes zu einer verbesserten Lagerstabilität. Dies ermöglicht, dass die Leichtputzmischung bereits in pastöser Form und nicht als Trockensystem hergestellt und ausgeliefert werden kann, ohne dass durch den Abnehmer zusätzliche Arbeitsschritte, wie das Vermischen mit Wasser, durchgeführt werden müssen. Die Leichtputzmischung liegt somit in pastöser Form vor, die sich zur direkten Auftragung auf beliebigen Untergründen eignet.

Bevorzugt enthält die Leichtputzmischung folgende Komponenten (bezogen auf 100 Masse-%):
a) 4,0 bis 15 Masse-% des Bindemittels,
b) 30,0 bis 80,0 Masse-% des anorganischen Füllstoffes,
c) 2,0 bis 10,0 Masse-% des Leichtfüllstoffes sowie
d) 0,1 bis 10,0 Masse-% Additive sowie 6,0 bis 18 Masse-% Wasser.

Als Leichfüllstoff werden Stoffe auf anorganischer Basis ausgewählt. Hierzu zählen insbesondere Bims, expandierter Perlit, Blähgas, Hohlglaskugeln und Calciumsilikat-Hydrate.

In einer weiteren Variante oder ergänzend zu den Leichfüllstoffen auf anorganischer Basis können auch Leichfüllstoffe auf organischer Basis enthalten sein. Unter diesen ist insbesondere Polystyrol zu nennen.

Der Leichfüllstoff ist dabei vorzugsweise im Wesentlichen sphärisch und besitzt einen mittleren Korndurchmesser im Bereich von 50 µm bis 5 mm. Das Schüttgewicht der Leichtfüllstoffe ist dabei erfindungsgemäß < 1 g/cm³.

Die im Leichtputz enthaltenen anorganischen Füllstoffe sind vorzugsweise ausgewählt aus der Gruppe der Carbonate, Silikate und Oxide, wobei diese eine Partikelgröße von 2 µm bis 5 mm aufweisen. Als besonders bevorzugte anorganische Füllstoffe sind hier Calcit, Dolomit, Quarz, Talkum, Kaolin, Glimmer und/oder Kreide zu nennen. Das Schüttgewicht der anorganischen Füllstoffe ist > 1 g/cm³.

Das im Leichtputz enthaltene Bindemittel enthält in Wasser dispergierte Polymerisate, die ausgewählt sind aus der Gruppe der Polyacrylacrylate, Alkylacrylatstyrole und/oder Butadien/Styrolcopolymerisate.

Die wässrige Polymerdispersion ist dabei vorzugsweise eine 35 bis 65 %ige wässrige Dispersion.

Als Additive sind vorzugsweise Dispergiermittel, Stabilisatoren, Entschäumer, Verdicker, Konservierungsmittel, Pigmente und/oder Hydrophobierungsmittel enthalten.

Die erfindungsgemäße Leichtputzmischung findet Verwendung in Form von Oberputzen beliebiger Untergründe, insbesondere von Fassaden.

Anhand der nachfolgenden Beispiele soll der erfindungsgemäße Gegenstand näher beschrieben werden, ohne diesen auf die hier gezeigten Ausführungsformen einschränken zu wollen.

### Beispiel 1

Eine erfindungsgemäße Variante des Leichtputzes stellt einen Kunstharz-gebundenen Leichtputz mit der in Tabelle 1 aufgeführten Zusammensetzung dar.

**Tabelle 1**

| | Gew.-% |
|---|---|
| Wasser | 29,63 |
| Verdickungsmittel | 0,6 |
| Additive | 2,7 |
| Titandioxid (d50 < 1 µm) als funktionelles Weißpigment | 2,8 |
| Leichtfüllstoff (Schüttgewicht < 1 g/cm³) | 16 |
| Füllstoff | 33,75 |
| Copolymerdispersion auf Basis Acrylsäureester/Methacrylsäureester 48 % als Bindemittel | 11,5 |
| Konservierungsmittel | 1 |
| Verfilmungshilfsmittel | 0,5 |
| Alkalihydroxid (Gew.-% einer 20-% Lösung) | 0,02 |
| Offenzeitmittel | 1,5 100 |

### Beispiel 2

Eine weitere Variante des erfindungsgemäßen Putzes betrifft einen Silikonharz-gebundenen Leichtputz mit der Zusammensetzung gemäß Tabelle 2.

**Tabelle 2**

| | Gew.-% |
|---|---|
| Wasser | 27,63 |
| Additive | 2,7 |
| Verdickungsmittel | 0,6 |
| Titandioxid (d50 < 1 µm) als funktionelles Weißpigment | 2,8 |
| Leichtfüllstoff (Schüttgewicht < 1 g/cm³) | 16 |
| Füllstoff | 33,75 |
| Copolymerdispersion auf Basis Acrylsäureester/Methacrylsäureester 48 % als Bindemittel | 9,5 |
| Silikonharzbindemittel (60 %ig) | 4 |
| Offenzeitmittel | 1,5 |
| Konservierungsmittel | 1 |
| Verfilmungshilfsmittel | 0,5 |
| Alkalihydroxid (Gew.-% einer 20% Lösung) | 0,02 100 |

### Beispiel 3

Ein weiterer erfindungsgemäßer Kunstharz-gebundener Leichtputz ist Tabelle 3 zu entnehmen.

**Tabelle 3**

| | Gew.-% |
|---|---|
| Wasser | 29,63 |
| Additive | 7,05 |
| Titandioxid (d50 < 1 µm) als funktionelles Weißpigment | 2,8 |
| Leichtfüllstoff | 16 |
| Füllstoff | 33 |
| Copolymerdispersion auf Basis Acrylsäureester/Methacrylsäureester 48 % als Bindemittel | 11,5 |
| Alkalihydroxid (Gew.-% einer 20% Lösung) | 0,02 100 |

### Beispiel 4

In Tabelle 4 ist ein weiteres erfindungsgemäßes Leichtputzsystem dargestellt, das ebenfalls auf einem Silikonharz-gebundenen Leichtputz basiert.

**Tabelle 4**

| | Gew.-% |
|---|---|
| Wasser | 27,63 |
| Additive | 7,05 |
| Titandioxid (d50 < 1 µm) als funktionelles Weißpiqment | 2,8 |
| Leichtfüllstoff | 16 |
| Füllstoff | 33 |
| Copolymerdispersion auf Basis Acrylsäureester/Methacrylsäureester 48 % als Bindemittel | 9,5 |
| Silikonharzbindemittel | 4 |
| Alkalihydroxid (Gew.-% einer 20% Lösung) | 0,02 100 |

**Tabelle 5 - Silikonharzgebundener Leichtputz**

| | Gew.-% |
|---|---|
| Wasser | 25,38 |
| Verdickungsmittel | 2,3 |
| Additive | 0,5 |
| Titandioxid (d50 < 1 µm) als funktionelles Weißpigment | 2,8 |
| Leichtfüllstoff (Schüttgewicht < 1 g/cm³) | 24 |
| Füllstoff | 23 |
| Copolymerdispersion auf Basis Acrylsäureester/Methacrylsäureester 48 %ig als Bindemittel | 14 |
| Silikonharzbindemittel (60 %ig) | 4 |
| Konservierungsmittel | 1 |
| Verfilmungshilfsmittel | 0,5 |
| Alkalihydroxid (Gew.-% einer 20 % Lösung) | 0,02 |
| Offenzeitmittel | 2,5 100 |

**Tabelle 6 - Silikonharzgebundener Leichtputz**

| | Gew.-% |
|---|---|
| Wasser | 7,18 |
| Additive | 0,9 |
| Verdickungsmittel | 0,6 |
| Titandioxid (d50 < 1 µm) als funktionelles Weißpigment | 2,8 |
| Leichtfüllstoff (Schüttgewicht < 1 g/cm³) | 7 |
| Füllstoff | 62 |
| Copolymerdispersion auf Basis Acrylsäureester/Methacrylsäureester 48 %ig als Bindemittel | 11,5 |
| Silikonharzbindemittel (60 %ig) | 4 |
| Offenzeitmittel | 2,5 |
| Konservierungsmittel | 1 |
| Verfilmungshilfsmittel | 0,5 |
| Alkalihydroxid (Gew.-% einer 20 % Lösung) | 0,02 100 |

**Tabelle 7 - Silikonharzgebundener Leichtputz**

| | Gew.-% |
|---|---|
| Wasser | 28,38 |
| Verdickungsmittel | 2,3 |
| Additive | 0,5 |
| Titandioxid (d50 < 1 µm) als funktionelles Weißpigment | 2,8 |
| Leichtfüllstoff (Schüttgewicht < 1 g/cm³) | 24 |
| Füllstoff | 23 |
| Copolymerdispersion auf Basis Acrylsäureester/Methacrylsäureester 48 %ig als Bindemittel | 15 |
| Konservierungsmittel | 1 |
| Verfilmungshilfsmittel | 0,5 |
| Alkalihydroxid (Gew.-% einer 20 % Lösung) | 0,02 |
| Offenzeitmittel | 2,5 100 |

**Tabelle 8 - Silikonharzgebundener Leichtputz**

| | Gew.-% |
|---|---|
| Wasser | 11,18 |
| Additive | 0,9 |
| Verdickungsmittel | 0,6 |
| Titandioxid (d50 < 1 µm) als funktionelles Weißpigment | 2,8 |
| Leichtfüllstoff (Schüttgewicht < 1 g/cm³) | 7 |
| Füllstoff | 62 |
| Copolymerdispersion auf Basis Acrylsäureester/Methacrylsäureester 48 %ig als Bindemittel | 11,5 |
| Offenzeitmittel | 2,5 |
| Konservierungsmittel | 1 |
| Verfilmungshilfsmittel | 0,5 |
| Alkalihydroxid (Gew.-% einer 20 % Lösung) | 0,02 100 |

## Patentansprüche

1. Leichtputzmischung in pastöser Form enthaltend auf 100 Masse-%:
a) 3,0 bis 30 Masse-% eines Bindemittels, ausgewählt aus der Gruppe bestehend aus in Wasser dispergierten Polymerisaten, die ausgewählt sind aus Polyacrylacrylate, Alkylacrylatstyrol und/oder Butadien/Styrolcopolymerisate,
b) 5,0 bis 99 Masse-% anorganische Füllstoffe mit einem Schüttgewicht > 1 g/cm³,
c) 1,0 bis 30 Masse-% Leichtfüllstoffe mit einem Schüttgewicht < 1 g/cm³,
d) 0,01 bis 20 Masse-% Additive sowie
e) 3,0 bis 30 Masse-% Wasser.

2. Leichtputzmischung nach Anspruch 1, **dadurch gekennzeichnet, dass** er
a) 4,0 bis 15 Masse-% eines Bindemittels,
b) 30,0 bis 80,0 Masse-% anorganische Füllstoffe,
c) 2,0 bis 10,0 Masse-% Leichtfüllstoffe,
d) 0,1 bis 10,0 Masse-% Additive sowie
e) 6,0 bis 18 Masse-% Wasser enthält.

3. Leichtputzmischung nach mindestens einem der Ansprüche 1 oder 2,
**dadurch gekennzeichnet, dass** der Leichtfüllstoff auf anorganischer Basis beruht und ausgewählt ist aus Bims, expandiertem Perlit, Blähglas, Hohlglaskugeln und Calciumsilikat-Hydraten.

4. Leichtputzmischung nach mindestens einem der Ansprüche 1 bis 3,
**dadurch gekennzeichnet, dass** der Leichtfüllstoff auf organischer Basis beruht und insbesondere aus Polystyrol besteht.

5. Leichtputzmischung nach mindestens einem der Ansprüche 1 bis 4,
**dadurch gekennzeichnet, dass** der Leichtfüllstoff im Wesentlichen sphärisch ist und einen mittleren Korndurchmesser von 50 µm bis 5 mm aufweist.

6. Leichtputzmischung nach mindestens einem der Ansprüche 1 bis 5,
**dadurch gekennzeichnet, dass** die anorganischen Füllstoffe (b) ausgewählt sind aus Carbonaten, Silicaten und Oxiden und eine Partikelgröße von 2 µm bis 5 mm aufweisen.

7. Leichtputzmischung nach Anspruch 6,
**dadurch gekennzeichnet, dass** die Füllstoffe Calcit, Dolomit, Quarz, Talkum, Kaolin, Glimmer und/oder Kreide sind.

8. Leichtputzmischung nach mindestens einem der Ansprüche 1 bis 7,
**dadurch gekennzeichnet, dass** die wässrige Polymerdispersion eine 35 bis 65%ige wässrige Dispersion ist.

9. Leichtputzmischung nach mindestens einem der Ansprüche 1 bis 8,
**dadurch gekennzeichnet, dass** die Additive (d) Dispergiermittel, Stabilisatoren, Entschäumer, Verdicker, Konservierungsmittel, Pigmente und/oder Hydrophobierungsmittel sind.

10. Verwendung einer Leichtputzmischung nach mindestens einem der Ansprüche 1 bis 19 als Oberputz.

## Claims

1. Light plaster mixture in pasty form containing up to 100% by mass:
a) 3.0 to 30% by mass of a binder, selected from the group comprising polymers dispersed in water which are selected from polyacrylacrylates, alkylacrylate styrene and/or butadiene/styrene copolymers,
b) 5.0 to 99% by mass of inorganic fillers with a bulk density > 1 g/cm³,
c) 1.0 to 30% by mass of light fillers with a bulk density < 1 g/cm³,
d) 0.01 to 20% by mass of additives and
e) 3.0 to 30% by mass of water.

2. Light plaster mixture according to claim 1, **characterised in that** it contains
a) 4.0 to 15% by mass of a binder,
b) 30.0 to 80.0% by mass of inorganic fillers,
c) 2.0 to 10.0% by mass of light fillers,
d) 0.1 to 10.0% by mass of additives and
e) 6.0 to 18% by mass of water.

3. Light plaster mixture according to at least one of the claims 1 or 2,
**characterised in that** the light filler is based on an inorganic basis and is selected from pumice, expanded perlite, blown glass, hollow glass balls and calcium silicate hydrates.

4. Light plaster mixture according to at least one of the claims 1 to 3,
**characterised in that** the light filler is based on an organic basis and comprises in particular polystyrene.

5. Light plaster mixture according to at least one of the claims 1 to 4,
**characterised in that** the light filler is essentially spherical and has an average particle diameter of 50 µm to 5 mm.

6. Light plaster mixture according to at least one of the claims 1 to 5,
**characterised in that** the inorganic fillers (b) are selected from carbonates, silicates and oxides and have a particle size of 2 µm to 5 mm.

7. Light plaster mixture according to claim 6,
**characterised in that** the fillers are calcite, dolomite, quartz, talcum, kaolin, mica and/or chalk.

8. Light plaster mixture according to at least one of the claims 1 to 7,
**characterised in that** the aqueous polymer dispersion is a 35 to 65% aqueous dispersion.

9. Light plaster mixture according to at least one of the claims 1 to 8,
**characterised in that** the additives (d) are dispersion agents, stabilisers, defoamers, thickeners, preservatives, pigments and/or hydrophobing agents.

10. Use of a light plaster mixture according to at least one of the claims 1 to 9 as final coat.

## Revendications

1. Mélange d'enduit léger sous la forme d'une pâte, qui contient sur 100 % en masse :
a) 3,0 à 30 % en masse d'un liant choisi dans le groupe constitué des polymères dispersés dans l'eau, qui sont choisis parmi des polyacrylacrylates, des polymères de type acrylate d'alkyle-styrène et/ou des copolymères de type butadiène-styrène,
b) 5,0 à 99 % en masse de charges inorganiques présentant une valeur de densité apparente > 1 g/cm³,
c) 1,0 à 30 % en masse de charges légères présentant une valeur de densité apparente < 1 g/cm³,
d) 0,01 à 20 % en masse d'additifs, ainsi que
e) 3,0 à 30 % en masse d'eau.

2. Mélange d'enduit léger selon la revendication 1, **caractérisé en ce qu'**il contient :
a) 4,0 à 15 % en masse d'un liant,
b) 30,0 à 80,0 % en masse de charges inorganiques,
c) 2,0 à 10,0 % en masse de charges légères,
d) 0,1 à 10,0 % en masse d'additifs, ainsi que
e) 6,0 à 18 % en masse d'eau.

3. Mélange d'enduit léger selon au moins l'une quelconque des revendications 1 ou 2, **caractérisé en ce que** la charge légère repose sur une base inorganique et est choisie parmi la pièce ponce, la perlite expansée, le verre expansé, les billes de verre creuses et le silicate de calcium hydraté.

4. Mélange d'enduit léger selon au moins l'une quelconque des revendications 1 à 3, **caractérisé en ce que** la charge légère repose sur une base organique et est constitué, en particulier, de polystyrène.

5. Mélange d'enduit léger selon au moins l'une quelconque des revendications 1 à 4, **caractérisé en ce que** la charge légère est sensiblement sphérique et présente un diamètre granulaire moyen dans la plage de 50 µm à 5 mm.

6. Mélange d'enduit léger selon au moins l'une quelconque des revendications 1 à 5, **caractérisé en ce que** les charges inorganiques (b) sont choisies parmi les carbonates, les silicates et les oxydes, et présentent une taille particulaire dans la plage de 2 µm à 5 mm.

7. Mélange d'enduit léger selon la revendication 6, **caractérisé en ce que** les charges sont représentées par la calcite, la dolomite, le quartz, le talc, le caolin, le mica et/ou la craie.

8. Mélange d'enduit léger selon au moins l'une quelconque des revendications 1 à 7, **caractérisé en ce que** la dispersion polymère aqueuse est une dispersion aqueuse pour 35 à 65 %.

9. Mélange d'enduit léger selon au moins l'une quelconque des revendications 1 à 8, **caractérisé en ce que** les additifs (d) sont représentés par des agents dispersants, des stabilisants, des agents antimousses, des agents épaississants, des agents de conservation, des pigments et/ou des agents conférant un caractère hydrophobe.

10. Utilisation d'un mélange d'enduit léger selon au moins l'une quelconque des revendications 1 à 9, comme enduit de finition.
